# EUROPEAN PATENT SPECIFICATION

(11) **EP 1 755 209 B1**
(45) Date of publication and mention of the grant of the patent: **21.07.2010**
(21) Application number: 05028646.7
(22) Date of filing: 29.12.2005
(51) Int. Cl.: H02M 7/06, H02H 9/00

(54) **Three-phase rectifier with inrush current limiting circuit**
Dreiphasengleichrichter mit Einschaltstrombegrenzungsschaltung
Dispositif de redressement triphasé avec circuit de limitation de courant d'appel

(30) Priority: 18.08.2005 KR 2005075877
(43) Date of publication of application: 21.02.2007
(73) Proprietor: Samsung Electronics Co., Ltd., Suwon-Si, Gyeonggi-Do (KR)
(72) Inventor: Lee, Sang Taek, Seoul (KR)
(74) Representative: Grünecker, Kinkeldey, Stockmair & Schwanhäusser Anwaltssozietät

(56) References cited:
- EP-A1- 0 477 367
- JP-A- 7 308 020
- JP-A- 8 019 265
- JP-A- 2001 045 680

## Description

### BACKGROUND OF THE INVENTION

### 1. Field of the Invention

The present invention relates to a three-phase power control system and control method using the same, and more particularly to a three-phase power control system for rectifying a three-phase AC voltage and providing the rectified DC voltage to a load, and a control method using the same.

### 2. Description of the Related Art

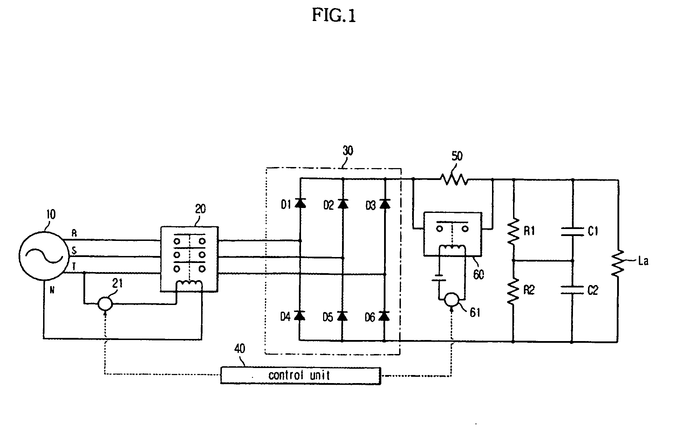

FIG. 1 is a circuit diagram showing the configuration of a general three-phase power control system.

As shown in this drawing, the general three-phase power control system aims to rectify a three-phase AC voltage into a DC voltage through a diode rectification circuit and to provide the DC voltage to a load (La) of an equipment set. The general three-phase power control system includes a first contactor 20, herein referred to as a connector, for providing or breaking the three-phase AC voltage 10; a three-phase rectifier 30; a current limiter 50; a second connector 60; divide resistors (R1, R2); and capacitors (C1, C2). In addition, the general three-phase power control system further includes a first driver 21 for switching on/off contacts of the first connector 20; a second driver 61 for switching on/off a contact of the second connector 60; and a control unit 40 for controlling each of the first and second drivers 21, 61.

In the case where the three-phase AC voltage is initially applied to the system, if the control unit 40 switches on the contacts of the first connector 20, current flows through diodes (D1, D2 and D3) of the three-phase rectifier 30, wherein the contact of the second connector 60 is switched off. Accordingly, a charging current path is formed wherein the current flowing through the diodes (D1, D2 and D3) passes through the current limiter 50 and the capacitors (C1, C2). In addition, inrush current generated when the three-phase AC voltage is initially applied to the system is limited by the current limiter 50. This current limiting is continued until the current is fully charged in the capacitors (C1, C2).

After this, in order to normally operate the equipment set, the control unit 40 controls the second driver 61 and causes operating current to flow through the contact of the second connector 60, and thereby the equipment set may be stably operated.

In the case where the control unit 40 stops the equipment set or a malfunction occurs, the control unit 40 breaks the three-phase AC voltage applied to the contacts of the first connector 20 and the rectified DC voltage applied to the contact of the second connector 20.

The general three-phase power control system shown in FIG. 1 has no difficulty in normally performing a limitation function of the inrush current and a power shutoff function. However, since the operating current flows through the contact of the second connector 60, it is a heavy burden that the second connector 60 must be an expensive and high power connector. In addition, since the general three-phase power control system has a configuration that the current limiter 50 is connected to the second connector 60 in parallel, if a coil for driving the contact of the second connector 60 is malfunctioned, the contact of the second connector 60 is switched off. For this reason, since overcurrent flows into the current limiter 50 and causes the general three-phase power control system to generate heat, it is difficult to ensure a stable operation of the equipment set.

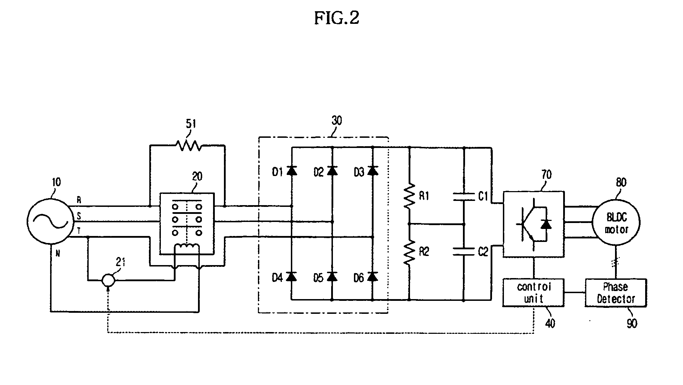

FIG. 2 is a circuit diagram showing the configuration of a high power three-phase power control system using a conventional inverter.

Referring to FIG. 2, some components of FIG. 2 which are similar to the components shown in FIG. 1 will be briefly described. Comparing with the components shown in FIG. 1, the high power three-phase power control system shown in FIG. 2 has a configuration in which the current limiter 51 is connected to the first connector 20 in parallel, and includes no second connector 60 as shown in FIG. 1.

In the case where the three-phase AC voltage is initially applied to the system, if the first connector is switched off, a charging current path is formed wherein current passes through the current limiter 51, the three-phase rectifier and the capacitor (C1, C2). After the capacitor (C1, C2) is fully charged, in order to normally operate the equipment set, the control unit 40 controls the first driver 21 and switches on the contacts of the first connector 20. Thereby, the operating current flowing through the contacts of the first connector 20 passes through the inverter 70, and then flows into a brushless DC (BLDC) motor 80. The control unit 40 controls the inverter on the basis of an output of a phase detector 90, and drives the BLDC motor 80.

The three-phase power control system shown in FIG. 2 may normally perform a limitation function of the inrush current by means of the current limiter 50 which is connected to the first connector 20 in parallel. However, if a malfunction occurs during operation of the system, the power source and the motor may not be electrically isolated from each other, resulting in difficulty in ensuring stability and reliability of the equipment set.

EP 0 477 367 A1 provides a device for preventing inrush current from flowing into an electric apparatus. Further, a first contactor between the AC power source and a rectifier circuit is provided, where two phases of the first contactor are bypassed. Each bypass further includes a second (and third) contactor.

### SUMMARY OF THE INVENTION

It is the object of the invention to improve such three-phase power control systems.

This object is solved by the present invention as claimed in the independent claims.

Preferred embodiments are defined by the dependent claims.

Therefore, it is an aspect of the invention to provide a three-phase power control system, wherein, by limiting inrush current generated when a three-phase AC voltage is initially applied as well as by breaking the three-phase AC voltage applied between a power source and a load, it is possible to ensure stability and reliability of an equipment set, and a control method using the same.

Additional aspects and/or advantages of the invention will be set forth in part in the description which follows and, in part, will be obvious from the description, or may be learned by practice of the invention.

In accordance with the invention, the above and/or other aspects can be achieved by the provision of a three-phase power control system for providing a three-phase AC voltage and controlling a load, the system comprising: a three-phase rectifier for rectifying the three-phase AC voltage into a DC voltage; a first connector for providing or breaking the three-phase AC voltage to the three-phase rectifier; a charging unit for charging the DC voltage rectified through the three-phase rectifier; and a bypass circuit for bypassing the first connector and providing the three-phase AC voltage to the charging unit, the bypass circuit comprising: a current limiter placed in the bypass circuit for limiting bypassed current which flows into the charging unit; and a second connector placed in the bypass circuit for providing or breaking a bypassed DC voltage to the charging unit.

The current limiter may be connected to the second connector in serial.

The system further includes a control unit for controlling the first connector and the second connector under operating conditions of the system.

The operating conditions may include a standby state wherein the three-phase AC voltage is not provided to the load, a transitional state for initially applying the three-phase AC voltage and charging the DC voltage in the charging unit, a normal operation state for providing operating current to the load, and a malfunction state in which a malfunction occurs during operation of the system.

In the case where the present state is the transitional state, the control unit may break the three-phase AC voltage applied to the first connector, and simultaneously provide the bypassed DC voltage to the charging unit through the second connector.

The current limiter may limit inrush current until the charging unit is fully charged.

In the case where the present state is the normal operation state, the control unit may break the bypassed voltage applied to the second connector, and provide the three-phase AC voltage through the first connector.

The control unit may break, in the case where the present state is the malfunction state, the three-phase voltage applied to the first connector and the second connector.

In the case where the present state is the transitional state, the control unit may provide the bypassed DC voltage to the charging unit through the second connector, and provide the three-phase AC voltage to the charging unit through the three-phase rectifier.

The bypass circuit may be an electrical wire for providing any one phase voltage of the three-phase AC voltage.

The system further includes a diode placed in the bypass circuit for breaking reverse current.

The bypass circuit may connect any one phase voltage of the three-phase voltage to the charging unit.

The bypass circuit may connect any one phase voltage of the three-phase to any one among a plurality of diodes of the three-phase rectifier.

In accordance with yet another aspect of the present invention, there is provided a method for controlling a three-phase power control system which includes a three-phase rectifier for rectifying a three-phase AC voltage into a DC voltage, a first connector for applying or breaking the three-phase AC voltage to the three-phase rectifier, a charging unit being provided the rectified DC voltage of the three-phase rectifier and for charging the rectified DC voltage, and a bypass circuit for bypassing the first connector and for providing a bypassed DC voltage to the charging unit, the method comprising; determining operating conditions of the system; and providing the DC voltage to the charging unit or the load through any one of the first connector or the bypass circuit under the operating conditions.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a circuit diagram showing the configuration of a general three-phase power control system;
FIG. 2 is a circuit diagram showing the configuration of a high power three-phase power control system using a conventional inverter;
FIG. 3 is a circuit diagram showing the configuration of a three-phase power control system according to a first embodiment of the present invention;
FIG. 4 is a circuit diagram showing the configuration of a three-phase power control system according to a second embodiment of the present invention;
FIG. 5 is a circuit diagram showing the configuration of a three-phase power control system according to a third embodiment of the present invention; and
FIG. 6 is a circuit diagram showing the configuration of a three-phase power control system according to a fourth embodiment of the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

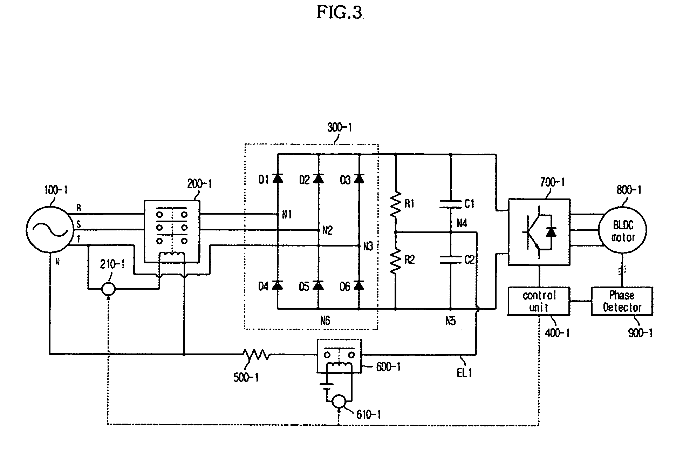

FIG. 3 is a circuit diagram showing the configuration of a three-phase power control system according to a first embodiment of the present invention. Components with the same function as described in the conventional three-phase power control system will be briefly explained, and their distinctive configuration will be mainly explained.

As shown in this drawing, the three-phase power control system according to the first embodiment of the present invention includes a first connector 200-1 for providing or breaking the three-phase AC voltage 100-1; a first driver 210-1 for switching on/off contacts of the first connector 200-1; a three-phase rectifier 300-1 for rectifying applied AC power voltage into a DC voltage, which contains three-phase diodes (D1~D6); capacitors (C1, C2) for smoothing the DC voltage; an inverter (700-1) for converting the DC voltage into AC voltage, and providing the AC voltage to a BLDC motor (800-1); divide resistors (R1, R2) for equally dividing the DC voltage into the capacitors (C1, C2) which are connected in serial; a phase detector 900-1; and a control unit 400-1 for controlling the first connector 200-1 through the first driver 210-1, and controlling the inverter 700-1 according to an output of the phase detector 900-1.

In addition, the three-phase power control system shown in FIG. 3 has a distinctive configuration differed from the configuration shown in FIG. 2, that is, the three-phase power control system shown in FIG. 3 includes a bypass electrical wire (EL1) for providing a voltage bypassing the first connector 200-1 to the capacitors (C1, C2), wherein, the bypass electrical wire (EL1) is connected to the current limiter 500-1 and the second connector 600-1 in serial. The current limiter 500-1 is embodied as a resistor with a preset electrical resistance value. One side of the bypass electrical wire (EL1) is connected to an N-phase of the three-phase AC voltage 100-1, and another side thereof is connected to an intersection between the capacitors (C1, C2). The second connector 600-1 is switched on/off through the second driver 610-1.

In a standby state wherein the three-phase AC voltage 100-1 is not provided, under control of the control unit 400-1, the contacts of the first connector 200-1 and the second connector 600-1 are switched off, and an applied voltage between the three-phase AC voltage 100-1 and a load is shutoff.

In a transitional state for initially applying the three-phase AC voltage, under control of the control unit 400-1, the contacts of the first connector 200-1 are switched off, and the contact of the second connector 600-1 is switched on. Thereby, a charging current path is formed wherein current passes through a T-phase of the three-phase voltage 100-1, a contact (N3) of the three-phase rectifier 300, a diode (D3), the first capacitor (C1), the second connector 600-1, the current limiter 500-1, and an N-phase of the three-phase voltage 100-1, and then the first capacitor (C1) is charged. If polarities of the T-phase and N-phase of the three-phase voltage 100-1 are mutually exchanged, the second capacitor (C2) is charged. The charging of the first and second capacitors which are connected in serial is alternately performed according to the reversal of the polarities. The inrush current generated from such charging operation is limited by the current limiter 500-1.

In the case where the BLDC motor 800-1 as the load is operated, under control of the control unit 400-1, the contact of the second connector 600-1 is switched off, and simultaneously the operating current which flows through the contacts of the first connector 200-1 is rectified by the three-phase rectifier 300-1. In addition, the rectified DC voltage is converted into AC voltage by means of the inverter 700-1, and the resulting AC voltage is applied to the BLDC motor 800-1.

Meanwhile, in the case where a malfunction occurs during operation of the system, under control of the control unit 400-1, the contacts of the first connector 200-1 and the second connector 600-1 are all switched off, and the power voltage is separated from the load so as to shut-off the power voltage.

The power supplying states of the first connector and the second connector according to the above operating conditions are shown in the following table 1.

| Operating conditions | The first connector | The second connector | Remarks |
|---|---|---|---|
| Standby State | OFF | OFF | Separate load from power voltage |
| Transitional State | OFF | ON | Inrush current limitation, capacitor charging |
| Normal State | ON | OFF | Provide operating current through the first connector |
| Malfunction State | OFF | OFF | Separate load from power voltage |

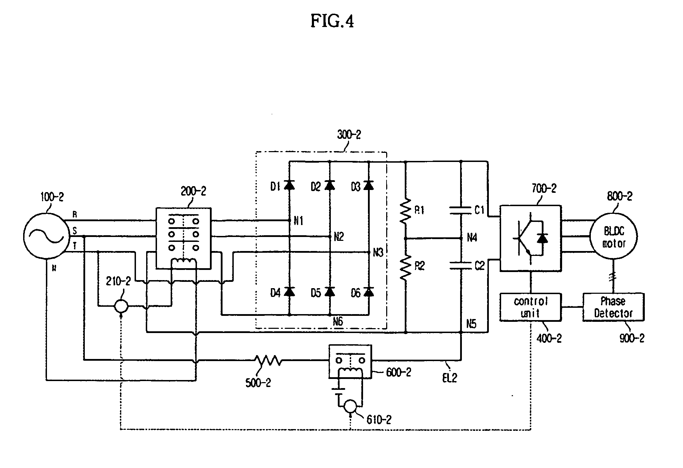

FIG. 4 is a circuit diagram showing the configuration of a three-phase power control system according to a second embodiment of the present invention. Some components of the three-phase power control system shown in FIG. 4 are modified forms of the components of the three-phase power control system shown in FIG. 3.

As shown in this drawing, the three-phase power control system according to the second embodiment of the present invention includes a three-phase AC voltage 100-2, a first connector 200-2, a first driver 210-2, a three-phase rectifier 300-2, capacitors (C1, C2), an inverter 700-2, divide resistors (R1, R2), a phase detector 900-2, a BLDC motor 800-2, and a control unit 400-2, wherein the control unit 400-2 controls the first connector 200-2 through the first driver 210-2, and controls the inverter 700-2 according to an output of the phase detector 900-2. Such configuration according to the second embodiment is similar with the configuration according to the first embodiment.

Similarly, the three-phase power control system includes a bypass electrical wire (EL2) for providing a voltage bypassing the first connector 200-2 to the capacitors (C1, C2). Over the bypass electrical wire (EL2), the current limiter 500-2 is connected to the second connector 600-2 in serial. Such configuration according to the second embodiment is similar with the configuration according to the first embodiment.

However, one side of the bypass electrical wire (EL2) is connected to an S-phase of the three-phase AC voltage, and another side of the bypass electrical wire (EL2) is connected to a contact (N5) of the second capacitor (C2) , that is, a cathode (-) of the inverter 700-2. In addition, a cathode contact (N6) of the three-phase rectifier 300-2 and the cathode contact (N5) of the inverter 700-2 are connected each other using a remaining contact of the first connector 200-2. Such configuration according to the second embodiment is different from the configuration according to the first embodiment.

Referring to the configuration of the second embodiment of the present invention, in the case where the bypass electrical wire (EL2) bypasses the first connector 200-2 and provides the three-phase AC voltage to the capacitors (C1, C2), table 1 shows the states of the first connector 200-2 and the second connector 600-2, the limitation of inrush current by means of the current limiter 500-2, the power shutoff between the three-phase voltage and the load when a malfunction occurs.

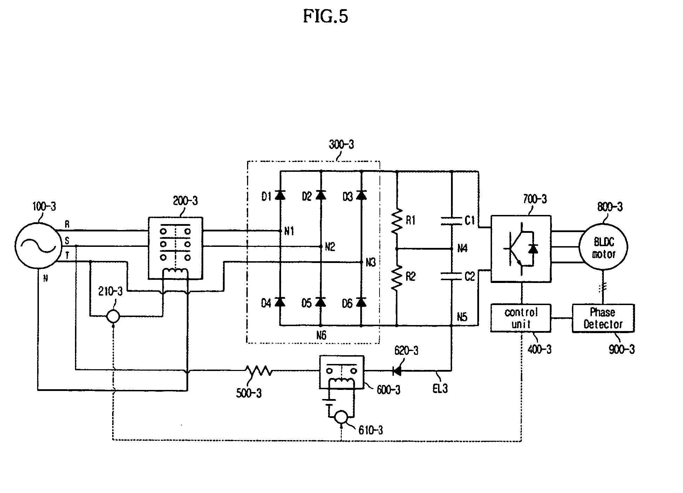

FIG. 5 is a circuit diagram showing the configuration of a three-phase power control system according to a third embodiment of the present invention. Some components of the three-phase power control system shown in FIG. 5 are modified forms of the components of the three-phase power control system shown in FIG. 3.

As shown in this drawing, the three-phase power control system according to the third embodiment of the present invention includes a three-phase AC voltage 100-3, a first connector 200-3, a first driver 210-3, a three-phase rectifier 300-3, capacitors (C1, C2), an inverter 700-3, divide resistors (R1, R2), a phase detector 900-3, a BLDC motor 800-3, and a control unit 400-3, wherein the control unit 400-3 controls the first connector 200-3 through the first driver 210-3, and controls the inverter 700-3 according to an output of the phase detector 900-3. Such configuration according to the third embodiment is similar with the configuration according to the first embodiment.

Similarly, the three-phase power control system includes a bypass electrical wire (EL3) for providing a voltage bypassing the first connector 200-3 to the capacitors (C1, C2). Over the bypass electrical wire (EL2), the current limiter 500-3 is connected to the second connector 600-3 in serial. Such configuration according to the third embodiment is similar with the configuration according to the first embodiment.

However, one side of the bypass electrical wire (EL3) is connected to an S-phase of the three-phase AC voltage, and another side of the bypass electrical wire (EL3) is connected to a contact (N5) of the second capacitor (C2), that is, a cathode (-) of the inverter 700-3. In addition, a diode 620-3 for preventing reverse current is connected to an intersection between the second connector 600-3 and the contact (N5) of the inverter 700-2. Such configuration according to the third embodiment is different from the configuration according to the first embodiment. Herein, the second capacitor C2 is charged in only a direction by means of the diode 620-3 for preventing reverse current.

Referring to the configuration of the third embodiment of the present invention, in the case where the bypass electrical wire (EL3) bypasses the first connector 200-3 and provides the three-phase AC voltage to the capacitors (C1, C2), table 1 shows the states of the first connector 200-2 and the second connector 600-3, the limitation of inrush current by means of the current limiter 500-3, the power shutoff between the three-phase voltage and the load when a malfunction occurs.

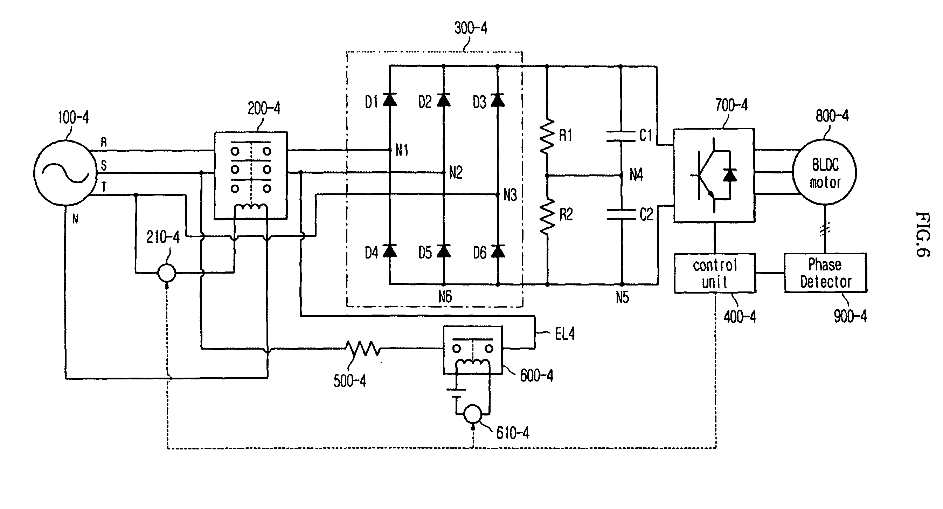

FIG. 6 is a circuit diagram showing the configuration of a three-phase power control system according to a fourth embodiment of the present invention. Some components of the three-phase power control system shown in FIG. 6 are modified forms of the components of the three-phase power control system shown in FIG. 3.

As shown in this drawing, the three-phase power control system according to the fourth embodiment of the present invention includes a three-phase AC voltage 100-4, a first connector 200-4, a first driver 210-4, a three-phase rectifier 300-4, capacitors (C1, C2), an inverter 700-4, divide resistors (R1, R2), a phase detector 900-4, a BLDC motor 800-4, and a control unit 400-4, wherein the control unit 400-4 controls the first connector 200-4 through the first driver 210-4, and controls the inverter 700-4 according to an output of the phase detector 900-4. Such configuration according to the fourth embodiment is similar with the configuration according to the first embodiment.

Similarly, the three-phase power control system includes a bypass electrical wire (EL2) for providing a voltage bypassing the first connector 200-2 to the capacitors (C1, C2). Over the bypass electrical wire (EL2), the current limiter 500-2 is connected to the second connector 600-2 in serial. Such configuration according to the fourth embodiment is similar with the configuration according to the first embodiment.

However, one side of the bypass electrical wire (EL2) is connected to an S-phase of the three-phase AC voltage, and another side of the bypass electrical wire (EL2) is connected to a contact of any one diode of the three-phase rectifier 300-4, for example, a contact (N2) of any one among diodes (D2, D5). Such configuration according to the fourth embodiment is different from the configuration according to the first embodiment.

Referring to the configuration of the fourth embodiment of the present invention, in the case where the bypass electrical wire (EL2) bypasses the first connector 200-2 and provides the three-phase AC voltage to the capacitors (C1, C2), table 1 shows the states of the first connector 200-2 and the second connector 600-2, the limitation of inrush current by means of the current limiter 500-2, the power shutoff between the three-phase voltage and the load when a malfunction occurs.

As is apparent from the above description, the present invention provides a three-phase power control system, wherein, since the system includes a bypass electrical wire for providing a voltage bypassing the first connector to the capacitors, in which, the bypass electrical wire is connected to the current limiter and the second connector in serial, it is possible to switch on/off contacts of the connector according to respective operating conditions. In addition, by limiting inrush current generated when initially applying voltage as well as by breaking an applied voltage between a power source and a load when a malfunction occurs during operation of the system, it is possible to ensure stability and reliability of the equipment set, and a control method using the same.

Although a few embodiments of the present invention have been shown and described, it would be appreciated by those skilled in the art that changes may be made in these embodiments without departing from the principles of the invention, the scope of which is defined in the claims.

## Claims

1. A three-phase power control system for providing a three-phase AC voltage (100) and controlling a load (800), the system comprising:
a three-phase six-pulse rectifier (300) for rectifying the three-phase AC voltage into a DC voltage;
a first contactor (200) for providing or breaking the three-phase AC voltage to two inputs (N1, N2) of the three-phase rectifier (300), the third input (N3) being permanently connected to one phase (T) of the three-phase AC voltage (100);
a capacitor arrangement including at least two capacitors (C1, C2) connected in series between the DC outputs of the three-phase rectifier (300) and wherein the DC voltage is provided to a first contact of the capacitor arrangement; and
a bypass circuit (500, 600, EL1, EL2, EL3) for bypassing the first contactor and the three-phase rectifier, wherein the bypass circuit is connected to a second contact (N4, N5) of the capacitor arrangement forming a charging current path from the three-phase AC voltage through the third input (N3) of the three-phase rectifier and through the capacitor arrangement, the charging current path and the bypass circuit providing a voltage to the capacitor arrangement, the bypass circuit comprising:
a current limiter (500) placed in the bypass circuit for limiting bypassed current which flows into the capacitor arrangement; and
a second contactor (600) placed in the bypass circuit for providing or breaking a bypassed voltage to the capacitor arrangement.

2. The system as set forth in claim 1, wherein the current limiter is connected to the second contactor in serial.

3. The system as set forth in claim 1, further comprising a control unit for controlling the first contactor and the second contactor under operating conditions of the system.

4. The system as set forth in claim 3, wherein the operating conditions include a standby state wherein the three-phase AC voltage is not provided to the load, a transitional state for initially applying the three-phase AC voltage through the charging current path and charging the DC voltage in the capacitor arrangement, a normal operation state for providing operating current to the load, and a malfunction state in which a malfunction occurs during operation of the system.

5. The system as set forth in claim 4, wherein, the control unit breaks, in the case where the present state is the transitional state, the three-phase AC voltage by switching off the first contactor, and simultaneously provides the bypassed DC voltage to the capacitor arrangement through the second contactor.

6. The system as set forth in claim 5, wherein the current limiter limits inrush current until the capacitor arrangement is fully charged.

7. The system as set forth in claim 4, wherein, the control unit breaks, in the case where the present state is the normal operation state, the bypassed voltage by switching off the second contactor, and provides the three-phase AC voltage through the first contactor.

8. The system as set forth in claim 4, wherein, the control unit breaks, in the case where the present state is the malfunction state, the three-phase voltage and the bypassed DC voltage by switching off the first contactor and the second contactor.

9. The system as set forth in claim 4, wherein, the control unit provides, in the case where the present state is the transitional state, the bypassed DC voltage to the capacitor arrangement through the second contactor, and provides the three-phase AC voltage to the capacitor arrangement through the three-phase rectifier.

10. The system as set forth in claim 1, wherein the bypass circuit is an electrical wire for providing any one phase voltage of the three-phase AC voltage.

11. The system as set forth in claim 1, further comprising a diode placed in the bypass circuit for breaking reverse current.

12. The system as set forth in claim 1, wherein the bypass circuit connects any one phase voltage of the three-phase voltage to the capacitor arrangement.

13. A method for controlling a three-phase power control system according to claim 1, the method comprising;
determining operating conditions of the system; and
providing the rectified DC voltage to the capacitor arrangement or the load through any one of the first contactor or the bypass circuit under the operating conditions.

## Patentansprüche

1. Dreiphasen-Stromsteuerungssystem zum Bereitstellen einer Dreiphasen-Wechselspannung (100) und zum Steuern einer Last (800), wobei das System umfasst:
einen Dreiphasen-Sechspuls-Gleichrichter (300) zum Gleichrichten der Dreiphasen-Wechselspannung zu einer Gleichspannung;
einen ersten Kontaktgeber (200) zum Bereitstellen oder Unterbrechen der Dreiphasen-Wechselspannung für zwei Eingänge (N1, N2) des Dreiphasen-Gleichrichters (300),
wobei der dritte Eingang (N3) permanent mit einer Phase (T) der Dreiphasen-Wechselspannung (100) verbunden ist;
eine Kondensatoranordnung, die wenigstens zwei Kondensatoren (C1, C2) enthält, die in Reihe zwischen die Gleichstromeingänge des Dreiphasen-Gleichrichters (300) geschaltet sind, wobei die Gleichspannung einem ersten Kontakt der Kondensatoranordnung bereitgestellt wird; und
eine Umgehungsschaltung (500, 600, EL1, EL2, EL3), mit der der ersten Kontaktgeber und der Dreiphasen-Gleichrichter umgangen werden, wobei die Umgehungsschaltung mit einem zweiten Kontakt (N4, N5) der Kondensatoranordnung verbunden ist, der einen Ladestromweg von der Dreiphasen-Wechselspannung über den dritten Eingang (N3) des Dreiphasen-Gleichrichters und über die Kondensatoranordnung bildet, und der Ladestromweg sowie die Umgehungsschaltung zu der Kondensatoranordnung eine Spannung bereitstellen und die Umgehungsschaltung umfasst:
einen Strombegrenzer (500), der in der Umgehungsschaltung angeordnet ist, um umgeleiteten Strom zu begrenzen, der in die Kondensatoranordnung fließt; und
einen zweiten Kontaktgeber (600), der in der Umgehungsschaltung zum Bereitstellen oder Unterbrechen einer umgeleiteten Spannung zu der Kondensatoranordnung angeordnet ist.

2. System nach Anspruch 1, wobei der Strombegrenzer in Reihe mit dem zweiten Kontaktgeber verbunden ist.

3. System nach Anspruch 1, das des Weiteren eine Steuereinheit zum Steuern des ersten Kontaktgebers und des zweiten Kontaktgebers unter Betriebsbedingungen des Systems umfasst.

4. System nach Anspruch 3, wobei die Betriebsbedingungen einen Bereitschaftszustand, in dem die Dreiphasen-Wechselspannung der Last nicht bereitgestellt wird, einen Übergangszustand, in dem die Dreiphasen-Wechselspannung über den Ladestromweg anfänglich bereitgestellt wird und die Kondensatoranordnung mit der Gleichspannung geladen wird, einen normalen Betriebszustand, in dem der Last-Betriebsstrom bereitgestellt wird, und einen Fehlfunktionszustand einschließen, in dem eine Fehlfunktion während des Betriebes des Systems auftritt.

5. System nach Anspruch 4, wobei die Steuereinheit, wenn der aktuelle Zustand der Übergangszustand ist, die Dreiphasen-Wechselspannung unterbricht, indem sie den ersten Kontaktgeber abschaltet, und gleichzeitig die umgeleitete Gleichspannung der Kondensatoranordnung über den zweiten Kontaktgeber bereitstellt.

6. System nach Anspruch 5, wobei der Strombegrenzer Einschaltstoßstrom begrenzt, bis die Kondensatoranordnung vollständig geladen ist.

7. System nach Anspruch 4, wobei die Steuereinheit, wenn der aktuelle Zustand der normale Betriebszustand ist, die umgeleitete Spannung unterbricht, indem sie den zweiten Kontaktgeber abschaltet, und die Dreiphasen-Wechselspannung über den ersten Kontaktgeber bereitstellt.

8. System nach Anspruch 4, wobei die Steuereinheit, wenn der aktuelle Zustand der Fehlfunktionszustand ist, die Dreiphasen-Spannung und die umgeleitete Gleichspannung unterbricht, indem sie den ersten Kontaktgeber und den zweiten Kontaktgeber abschaltet.

9. System nach Anspruch 4, wobei die Steuereinheit, wenn der aktuelle Zustand der Übergangszustand ist, die umgeleitete Gleichspannung der Kondensatoranordnung über den zweiten Kontaktgeber bereitstellt und die Dreiphasen-Wechselspannung der Kondensatoranordnung über den Dreiphasen-Gleichrichter bereitstellt.

10. System nach Anspruch 1, wobei die Umgehungsschaltung ein elektrischer Leiter zum Bereitstellen von Spannung einer beliebigen Phase der Dreiphasen-Wechselspannung ist.

11. System nach Anspruch 1, das des Weiteren eine in die Umgehungsschaltung eingesetzte Diode zum Unterbrechen von Rückstrom umfasst.

12. System nach Anspruch 1, wobei die Umgehungsschaltung der Kondensatoranordnung Spannung einer beliebigen Phase der Dreiphasen-Wechselspannung bereitstellt.

13. Verfahren zum Steuern eines Dreiphasen-Stromsteuerungssystems nach Anspruch 1, wobei das Verfahren umfasst:
Bestimmen von Betriebsbedingungen des Systems; und
Bereitstellen der gleichgerichteten Gleichspannung für die Kondensatoranordnung oder die Last über den ersten Kontaktgeber oder die Umgehungsschaltung unter den Betriebsbedingungen.

## Revendications

1. Système triphasé de commande de puissance permettant de fournir une tension alternative triphasée (100) et de commander une charge (800), le système comprenant :
un redresseur triphasé double alternance (300) permettant de redresser la tension alternative triphasée en une tension continue,
un premier contacteur (200) permettant de fournir ou de couper la tension alternative triphasée sur deux entrées (N1, N2) du redresseur triphasé (300), la troisième entrée (N3) étant en permanence reliée à une phase (T) de la tension alternative triphasée (100),
un agencement de condensateurs incluant au moins deux condensateurs (C1, C2) reliés en série entre les sorties en courant continu du redresseur triphasé (300) et dans lequel la tension continue est fournie à un premier contact de l'agencement de condensateurs, et
un circuit de dérivation (500, 600, EL1, EL2, EL3) destiné à shunter le premier contacteur et le redresseur triphasé, le circuit de dérivation étant relié à un second contact (N4, N5) de l'agencement de condensateurs en formant une ligne de courant de charge depuis la tension alternative triphasée au travers de la troisième entrée (N3) du redresseur triphasé et au
travers de l'agencement de condensateurs, la ligne de courant de charge et le circuit de dérivation fournissant une tension à l'agencement de condensateurs, le circuit de dérivation comprenant :
un limiteur de courant (500) placé dans le circuit de dérivation afin de limiter le courant dérivé qui circule dans l'agencement de condensateurs, et
un second contacteur (600) placé dans le circuit de dérivation afin de fournir ou de couper une tension shuntée vers l'agencement de condensateurs.

2. Système selon la revendication 1, dans lequel le limiteur de courant est relié en série au second contacteur.

3. Système selon la revendication 1, comprenant en outre une unité de commande destinée à commander le premier contacteur et le second contacteur dans les conditions de fonctionnement du système.

4. Système selon la revendication 3, dans lequel les conditions de fonctionnement incluent un état d'attente dans lequel la tension alternative triphasée n'est pas fournie à la charge, un état de transition destiné à appliquer à l'origine la tension alternative triphasée au travers de la ligne courant de charge et à charger l'agencement des condensateurs avec la tension continue, un état de fonctionnement normal destiné à fournir un courant de fonctionnement à la charge, ainsi qu'un état de dysfonctionnement dans lequel se produit un défaut pendant le fonctionnement du système.

5. Système selon la revendication 4, dans lequel l'unité de commande coupe, dans le cas où l'état en cours est l'état de transition, la tension alternative triphasée en ouvrant le premier contacteur, et elle fournit simultanément la tension continue shuntée à l'agencement de condensateurs par l'intermédiaire du second contacteur.

6. Système selon la revendication 5, dans lequel le limiteur de courant limite le courant d'appel jusqu'à ce que l'agencement de condensateurs soit entièrement chargé.

7. Système selon la revendication 4, dans lequel l'unité de commande coupe, dans le cas où l'état en cours est l'état de fonctionnement normal, la tension shuntée en ouvrant le second contacteur, et elle fournit la tension alternative triphasée par l'intermédiaire du premier contacteur.

8. Système selon la revendication 4, dans lequel l'unité de commande coupe, dans le cas où l'état en cours est l'état de dysfonctionnement, la tension triphasée et la tension continue shuntée en ouvrant le premier contacteur et le second contacteur.

9. Système selon la revendication 4, dans lequel l'unité de commande fournit, dans le cas où l'état en cours est l'état de transition, la tension continue shuntée à l'agencement des condensateurs par l'intermédiaire du second contacteur, et elle fournit la tension alternative triphasée à l'agencement de condensateurs par l'intermédiaire du redresseur triphasé.

10. Système selon la revendication 1, dans lequel le circuit de dérivation est un fil électrique permettant de fournir une quelconque tension monophasée de la tension alternative triphasée.

11. Système selon la revendication 1, comprenant en outre une diode placée dans le circuit de dérivation, destinée à couper le courant inverse.

12. Système selon la revendication 1, dans lequel le circuit de dérivation relie une quelconque tension monophasée de la tension triphasée à l'agencement des condensateurs.

13. Procédé permettant de commander un système triphasé de commande de puissance conforme à la revendication 1, le procédé comprenant :
la détermination des conditions de fonctionnement du système, et
la fourniture de la tension continue redressée à l'agencement de condensateurs ou à la charge par l'intermédiaire de l'un quelconque du premier contacteur ou du circuit de dérivation dans les conditions de fonctionnement.
